(19) **Europäisches Patentamt**
**European Patent Office**
**Office européen des brevets**

(11) **EP 2 237 529 B1**

(12) **EUROPEAN PATENT SPECIFICATION**

(45) Date of publication and mention
of the grant of the patent:
**01.02.2012 Bulletin 2012/05**

(51) Int Cl.:
**H04L 29/08** *(2006.01)* **H04L 12/56** *(2006.01)*

(21) Application number: **09290235.2**

(22) Date of filing: **30.03.2009**

(54) **Method for building up two parallel distribution trees of a peer-to-peer network**

Verfahren zum Aufbau von zwei parallelen Verteilbäumen eines nicht-hierarchischen Netzes

Procédé de création de deux arbres de distribution parallèles d'un réseau poste-à-poste

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**06.10.2010 Bulletin 2010/40**

(73) Proprietor: **Alcatel Lucent
75008 Paris (FR)**

(72) Inventors:
 • **Strauss, Thomas
 73734 Esslingen (DE)**
 • **Schwan, Nico
 70197 Stuttgart (DE)**
 • **Tomsu, Marco
 71254 Ditzingen (DE)**

(74) Representative: **Schmidt, Werner Karl
Alcatel Lucent
Intellectual Property & Standards
74430 Stuttgart (DE)**

(56) References cited:
 **US-A1- 2009 034 434**

 • **MAYA DOBUZHSKAYA, ROSE LIU, JIM ROEWE, NIDHI SHARMA: "Zebra: Peer To Peer Multicast for Live Streaming Video" MIT 6.824, [Online] 6 May 2004 (2004-05-06), pages 1-7, XP002543347 Massachusetts Institute of Technology Retrieved from the Internet: URL:http://www.eecs.berkeley.edu/~rfl/publ ications/6824finalproject.pdf> [retrieved on 2009-08-26]**
 • **ANTONIO NICOLOSI, SIDDHARTHA ANNAPUREDDY: "P2PCAST: A Peer-to-Peer Multicast Scheme for Streaming Data"[Online] 9 May 2003 (2003-05-09), pages 1-13, XP002543348 Proc. of the the First IRIS Student Workshop on Peer-to-Peer Systems, Aug 2003 Retrieved from the Internet: URL:http://www.scs.stanford.edu/ ~reddy/res earch/p2pcast/report.pdf> [retrieved on 2009-08-26]**

**Description**

The invention relates to content distribution in a peer-to-peer network, in particular to a method for building up two parallel distribution trees of a peer-to-peer network.

In the future, the Internet has to cope with huge amount of data caused by new applications which deal with the distribution of content, in particular live content, e.g. live sport events, live citizen journalism or live video chatting.

When using the classical client server model, more and more servers are needed to handle this content distribution to a huge audience. These servers are clustered to a content distribution network (CDN). E.g. the distribution of a video sequence of 20 sec length related to the 100 m final of Olympia to 100.000 subscribers within 5 minutes after the event causes data traffic of 100 GBytes. Therefore, a server needs about 2.67 GBit/s transport capacity to distribute this content within 5 minutes to all subscribers. For reducing the server streamlining capacity, the content can be distributed within peer-to-peer networks. In such peer-to-peer networks, participating peers offer their upload capacity to the network to distribute the content.

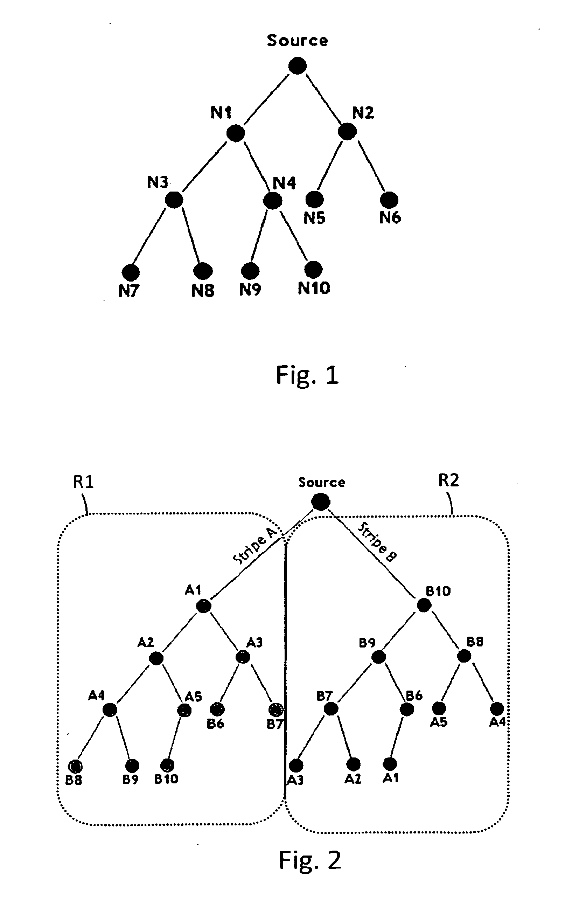

PPLive and SopCast are live video distribution applications mainly used for live soccer games. The distribution of data is done in BitTorrent like peer-to-peer networks. A peer looks for content at a database server. This returns a list of available peers. Then, the peer tries to connect to the peers of this list and downloads data chunks of the chosen stream. Therewith, a single streaming tree is built where each peer, except the leaf peers positioned in the leaf nodes of the tree, is distributing content to its child peers. Fig. 1 illustrates such a single streaming tree of a peer-to-peer network, where the content is streamed from a source to peers at nodes N1-N10. The peers at the leaf nodes N5-N10 do not upload the received content since the leaf peers at nodes N5-N10 only have content that its parents already have. Thus, the peers at leaf nodes N5-N10 do not provide their upload capacity to the system. Only the upload capacity of nodes N1-N4 is used for distributing the content in the tree. Moreover, free riders in such systems may try to get a leaf peer position so that they do not have to spend any upload resource. In addition, it is a further drawback that in most cases every data chunk has to be negotiated before downloading and therewith the distribution tree is dynamically built and restructured after every negotiation process for data chunks. E.g. the tree in Fig. 1 having peers at nodes N1-N10 corresponds to the tree structure for the distribution of a part of the content (e.g. 4$^{th}$ to 7$^{th}$ second of a movie). For the next part of the movie (e.g. 8$^{th}$ to 10$^{th}$ second), the tree is rebuilt and thus has a new structure. The tree in Fig. 1 exists for a short period in a meshed network.

In contrast to a single tree, parallel content distribution trees may be used. Such parallel trees are discussed in the document "Performance Analysis of Peer-to-Peer Networks for File Distribution", E. W. Biersack et al., in Proc. Fifth International Workshop on Quality of Future Internet Services (QofIS'04), 2004, www.eurecom.fr/~btroup/BPublished/QofIS_scalingpaper.pdf, and are also discussed in the document "SplitStream: High-bandwidth content distribution in cooperative environments", M. Castro et al., 2nd International Workshop on Peer-to-Peer Systems (IPTPS'03), iptps03.cs.berkeley.edu/final-papers/splitstream.pdf.

In parallel trees, the distribution of the content is typically based on a fair resource usage of all participating peers compared to a single tree since all peers typically contribute upload capacity to the system. In an architecture using k parallel trees (k ≥2), the content is split into k parts (also called stripes), with each part of the k parts being distributed in an associated tree of the k parallel trees. Each peer is assigned in one of trees the role of an interior node and in the remaining k-1 trees the role of a leaf node.

Fig. 2 shows two parallel trees R1 and R2, where stripe A of the content originating from a source node is distributed in the left tree R1 and stripe B of the content is distributed in the right tree R2. The peers A1-A5 act in the left tree 1 as interior nodes and thus stream the content to their leaves. In the other tree R2, the peers A1-A5 act as leaf nodes. The peers B6-B10 act in the right tree R2 as interior nodes and in the left tree R1 as leaf nodes. Due to the structure, it is precluded that peers only download content and do not update content. Update capacity of all peers A1-A5 and B6-B10 is used for content distribution.

The table below shows the inbound (= download) and outbound (= upload) bandwidth of the peers in the single binary tree of Fig. 1 and of the peers in the parallel binary trees of Fig. 2. As evident from the table, the outbound bandwidth within the two parallel trees of Fig. 2 is balanced in contrast to the outbound bandwidth within the single tree of Fig. 1.

| Node identifier | Parallel binary trees | | Single binary tree | |
|---|---|---|---|---|
| | Inbound | Outbound | Inbound | outbound |
| Source | - | 400 Kbit/s | - | 800 Kbit/s |
| 1 | 400 Kbitf s | 400 Kbit/s | 400 Kbit/s | 800 Kbit/s |

(continued)

| Node identifier | Parallel binary trees | | Single binary tree | |
|---|---|---|---|---|
| | Inbound | Outbound | Inbound | outbound |
| 2 | 400 Kbit/s | 400 Kbit/s | 400 Kbit/s | 800 Kbit/s |
| 3 | 400 Kbit/s | 400 Kbit/s | 400 Kbit/s | 800 Kbit/s |
| 4 | 400 Kbit/s | 400 Kbit/s | 400 Kbit/s | 800 Kbit/s |
| 5 | 400 Kbit/s | 200 Kbit/s | 400Kbit/s | - |
| 6 | 400 Kbit/s | 200 Kbit/s | 400 Kbit/s | - |
| 7 | 400 Kbit/s | 400 Kbit/s | 400 Kbit/s | - |
| 8 | 400 Kbit/s | 400 Kbit/s | 400 Kbit/s | - |
| 9 | 400 Kbit/s | 400 Kbit/s | 400 Kbit/s | - |
| 10 | 400 Kbit/s | 400 Kbit/s | 400 Kbit/s | - |

Parallel trees also overcome the problem of restructuring the tree during streaming. There is no negotiation phase before each chunk is transmitted. Peers are joining into the tree and therewith have a definite position and neighbor peers. Typically, parallel trees have a fixed structure during distribution of data. Such parallel trees will be reorganized, if a peer leaves the trees or fails. In contrast, in a meshed approach a peer has for each transfer of data no fixed partner; rather, the peer selects for each transfer the respectively most appropriate peer from a list of peers.

A MIT article of M. Dobuzhskaya et al. entitled "Zebra: Peer To Peer Multicast for Live Streaming Video" of May 6, 2004 discloses a peer to peer multicast scheme wherein parallel trees are used to distribute live stream video.

An article in the Proceedings of the First IRIS Student Workshop on Peer-to-Peer Systems of A. Nicolosi and S. Annapureddy entitled "P2PCAST: A Peer-To_Peer Multicast Scheme for Streaming Data" of May 9, 2003 discloses a peer-to-peer multicast scheme for streaming data.

US2009/034434A1 relates to a tree-based peer-to-peer live video streaming network with an interior-node-disjoint multi-tree structure.

Said documents discussing parallel trees do not describe how the trees are built up from joining peers. Moreover, in said documents no failure recovery mechanisms of crashed or left peers are given.

Hence, it is an object of the present invention to provide a method for building up two parallel distribution trees. A further object of the invention is to provide a resource manager used for building up the parallel distribution trees. Another object of the invention is to provide a failure recovery mechanism for a distribution tree or parallel distribution trees.

These objects are achieved by the subject-matter of the independent claims.

The invention provides a parallel joining algorithm to build up two parallel distribution trees (in particular two binary trees for streaming). The invention provides a joining algorithm where one peer joins a tree at a time and a joining algorithm where two peers in parallel may join a tree at a time. The invention further produces a failure and repair mechanism to keep the distribution tree robust so that peers do no experience a disruption of the content distribution (e.g. of a live stream) in case of failing of interior peers.

A first aspect of the application relates to a method for building up two parallel distribution trees for distributing content (e.g. for streaming video and/or audio content) from one or more source nodes to peers of a peer-to-peer-network. The first tree is for distribution of a first part of the content (e.g. a first stripe of a stream) and the second tree is for distribution of a second part of the content (e.g. a second stripe of a stream). Each peer of plurality of peers is assigned in a respective tree of the two trees the role of an interior node and is assigned in the respective other tree of the two trees the role of a leaf node.

According to first basic alternative of the inventive method, peers going to join a particular tree of the two trees are alternately assigned in the particular tree the role of an interior node and the role of a leaf node. In other words: the peers alternately join a particular tree of the two trees in the role of an interior node and the role of a leaf node. Thus, if a peer joined the first tree in the role of an interior node (and preferably the second tree in the role of a leaf node), a peer joining thereafter joins the first tree in the role of a leaf node (and preferably joins the second tree in the role of an interior node). A peer joining thereafter joins the first tree in the role of an interior node (and preferably joins the second tree in the role of a leaf node).

Preferably, an analogous concept applies for peers joining the second tree, with the difference that the roles are reversed: in case a peer joining a particular tree of the two trees is assigned the role of an interior node, this peer is assigned the role of a leaf node in the respective other tree, and in case a peer joining a particular tree of the two trees is assigned the role of a leaf node, this peer is assigned the role of an interior node in the respective other tree.

Such alternation sets up two parallel trees with a minimum depth and automatically creates open joining positions. These open positions may be used by other peers to join the trees.

According to a second basic alternative of the inventive method, peers going to join a particular tree of the two trees are alternately assigned in the particular tree n-times the role of an interior node and n-times the role of a leaf node, with $n \geq 2$, e.g. n = 2. In case of n = 2, one peer going to join a particular tree is assigned the role of an interior node, the next peer going to join the tree is assigned the role of interior node, the next but one peer is assigned the role of a leaf node, the next but one peer is assigned the role of a leaf node; this sequence is then repeated. The peers do not necessarily need to join in this sequence, in particular n peers may join in parallel, e.g. 2 peers in parallel. Thus, it is possible that two or more peers join a particular tree at a time. E.g. two peers may join in parallel a particular tree at a time. However, the peers may still join one after another.

It should be noted that a peer assigned the role of an interior node, does not necessarily immediately act as an interior node: Preferably, in case a peer going to join a particular tree is assigned the role of an interior node and only one position is open in the last level of the particular tree, said peer takes the open position which is a leaf node. However, said peer is used as a parent peer (i.e. interior node) for other peers joining afterwards.

Preferably, the two trees are binary trees, i.e. a tree structure in which each node has at most two child nodes.

According to a preferred embodiment of the first basic alternative of the method, in case a peer joining a particular tree of the two trees is assigned the role of a leaf node, this peer joins the particular tree as a child node of the last peer which joined the particular tree. Due to the alternation of leaf and interior join, the last peer cannot be a leaf node and therefore is able to forward content.

In case

- a peer joining a particular tree of the two trees is assigned the role of an interior node and
- the last level of the particular tree has no open positions or more than one open peer position,

this peer joins the particular tree

- in the position of the earliest joined leaf peer at a leaf node of the last level of the tree in case all positions in the last level are occupied or
- else in the position of the earliest joined leaf peer at a leaf node of the last but one level of the tree.

Alternatively, in case

- a peer joining a particular tree of the two trees is assigned the role of an interior node and
- the last level of the particular tree has only a single open position, this peer joins the particular tree in the open position of the last level which is a leaf node. However, since said peer is assigned the role of an interior node said peer can be used as a parent peer for other peers joining afterwards.

According to a preferred embodiment of the inventive method, the joining process makes use of a contact peer: a contact peer in a tree is determined for a peer joining a particular tree. Since the peer typically joins both parallel trees, a contact peer is determined within one tree and a contact peer is determined within the other tree.

In the following remarks relate to preferred embodiments of the first basic alternative of the inventive method (alternation of leaf and interior join):

In case peers going to join a particular tree of the two trees are alternately assigned in the particular tree the role of an interior node and the role of a leaf node, there are three alternatives for joining:

1. In case a peer joining the particular tree is assigned the role of a leaf node, this peer contacts its associated contact peer in the particular tree and joins the particular tree as a child node of the contact peer in a leaf position.

2. In case a peer joining a particular tree of the two trees is assigned the role of an interior node and the last level of the particular tree has no open positions or more than one open peer position, this peer contacts the associated contact peer and preferably communicates to the contact peer that it is its new parent. Optionally, the joining peer may also communicate to the parent peer of the contact peer that the contact peer is no longer a child of the parent peer. The peer joins the particular tree in the position of the contact peer. Thereafter, the contact peer forms a child node of the joined peer.

3. In case a peer joining a particular tree of the two trees is assigned the role of an interior node and the last level of the particular tree has only a single open position, this peer contacts its associated contact peer in the particular tree and joins the particular tree as a child node of the contact peer in a leaf position.

The teaching of each of the three alternatives may be isolated from the teaching of the respective two other alternatives.

In case peers going to join a particular tree of the two trees are alternately assigned in the particular tree n-times (e.g. 2-times) the role of an interior node and n-times the role of a leaf node (second basic alternative), preferably only the joining scenarios as discussed above under 1. and 2. occur (i.e. the peer assigned the role of an interior node does not join in a leaf position as discussed under 3.):

Thus, in case a peer joining the particular tree is assigned the role of a leaf node, this peer preferably contacts its associated contact peer in the particular tree and joins the particular tree as a child node of the contact peer in a leaf position. In case a peer joining a particular tree is assigned the role of an interior node, this peer contacts the associated contact peer and preferably communicates to the contact peer that it is its new parent. Optionally, the joining peer may also communicate to the parent peer of the contact peer that the contact peer is no longer a child of the parent peer. The peer joins the particular tree in the position of the contact peer. Thereafter, the contact peer forms a child node of the joined peer.

According to a preferred embodiment of the inventive method, a contact peer in a tree is determined for a peer joining this tree based on an identifier (typically an identification number) of the peer joining the tree. As a result, the joining position is computed based on the identification number of the joining peer. The identification number is typically a consecutive number assigned to the peers according to their joining sequence.

Preferably, the contact peer is determined by determining an identification number of the contact peer.

With respect to the first basic alternative of the inventive method (alternation of leaf and interior join), there are three basic scenarios for determining the identification number of the contact peer:

    1. In case a peer joining a particular tree of the two trees is assigned the role of a leaf node, the identification number of the contact peer corresponds to the identification number of the joining peer minus one.

    2. In case

- a peer joining a particular tree of the two trees is assigned the role of an interior node and
- the last level of the particular tree has no open positions or more than one open peer position,

the identification number of the contact peer corresponds to

$$P_{ID} - (2^{level} - 1)$$

Here, the term "$P_{ID}$" denotes the identification number of the joining peer, and the term "level" corresponds to the level difference between

- the level of a child node of the node where the peer is going to join the particular tree and
- the initial level of the particular tree which contains a peer (i.e. the up-most level of the trees R1, R2 in Fig. 2)

    3. In case

- a peer joining a particular tree of the two trees is assigned the role of an interior node and
- the last level of the particular tree has only a single open position, the identification number of the contact peer corresponds to

$$P_{ID} - 2^{level},$$

Here, the term "pied" denotes the identification number of the joining peer, and the term "level" corresponds to the level difference between
- the last level of the particular tree and
- the initial level of the particular tree which contains a peer.

As discussed above, two peers in parallel may join a tree at a time. This may be accomplished in such a way that peers going to join a particular tree of the two trees are alternately assigned in the particular tree 2-times the role of an interior node and 2-times the role of leaf node. In case a peer going to join the particular tree is assigned the role of a leaf node, the identification number of the contact peer preferably corresponds to the identification number of the new peer minus two (instead of one as discussed above). Also, the formula for determining the identification number of the contact peer in case the new peer is assigned the role of an interior node is different: in this case the identification number of the contact peer preferably corresponds to

$$P_{id} - (2^{level} - 2),$$

Here, the term "$P_{ID}$" denotes the identification number of the joining peer, and the term "level" corresponds to the level difference between

- the level of a child node of the node where the peer is going to join the particular tree and
- the initial level of the particular tree which contains a peer.

Please note that in contrast to the formulas for a single join at a time, here only a single formula is used for a new peer joining in the role of an interior node.

For determining the contact peer and thus for building the tree, a resource manager is preferably used:

This resource manager is contacted by a peer going to join a particular tree. The resource manager may assign an identifier to the peer. The resource manager determines a contact peer in the particular tree for the peer; in particular the resource manager determines an identification number of the contact peer based on the identifier of the new peer as discussed above. The resource manager transmits information (such as the identification number) about the contact peer to the new peer. The new peer contacts the contact peer based on the transmitted information. Preferably, the peer communicates the type of join to the contact peer.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

Another aspect of the application relates to a resource manager for building up two parallel trees according to the method as discussed above. Preferably, such resource manager is configured to determine a contact peer based on the identifier of the new peer as discussed above. The resource manager preferably also determines the identifier of the new peer in form of a consecutive number.

Still another aspect of the application relates to a peer-to-peer network comprising such a resource manager and peers organized in two parallel distribution trees.

Still another aspect of the application relates to a failure recovery method. The method is directed to failure of a parent peer which forms a parent node of a child peer in a distribution tree. Such a tree may be part of two or more parallel trees or may be a single tree. According to the method, one or more redundant links are pre-established, each from the child peer to a respective peer in a respective tree level upstream of the tree level of the child peer. In case the parent peer fails (e.g. because the parent peer has left the tree or fails due to other reasons), the child receives content from a peer to which said child pre-established a redundant link before.

The above remarks related to a particular aspect of the application are basically also applicable to other aspects of the application.

The invention is explained below in an exemplary manner with reference to the accompanying drawings, wherein

Fig. 1          illustrates an exemplary single streaming tree of a peer-to-peer network;

Fig. 2          illustrates an exemplary parallel tree structure using two parallel trees;

Fig. 3          illustrates a peer-to-peer network having a resource manager for constructing parallel distribution trees;

Fig. 4          illustrates the joining of a peer in two parallel distributions trees;

Fig. 5          illustrates the resulting distribution trees of Fig. 4 after joining of the new peer;

Fig. 6          illustrates joining of a peer in the role of a leaf node;

Fig. 7          illustrates joining of a peer in the role of an interior node at a leaf position;

Fig. 8          illustrates joining of a peer in the role of an interior node by re- placing and moving a child node;

Figs. 9a-9i    illustrate building up of two parallel distribution trees according to one embodiment of the inventive construction method;

Figs. 10a-10h  illustrate building up of two parallel distribution trees according to another embodiment of the inventive construction method;

Fig. 11        illustrates parent nodes and child nodes in a tree or a cut-out of a tree having a recovery area for failure recovery in case of fail- ure of one or more parent nodes;

Fig. 12        illustrates pre-established links in a pre-failure phase;

Fig. 13        illustrates the failure recovery phase; and

Fig. 14        illustrates the later repair.

Figs. 1-2 were already discussed above.

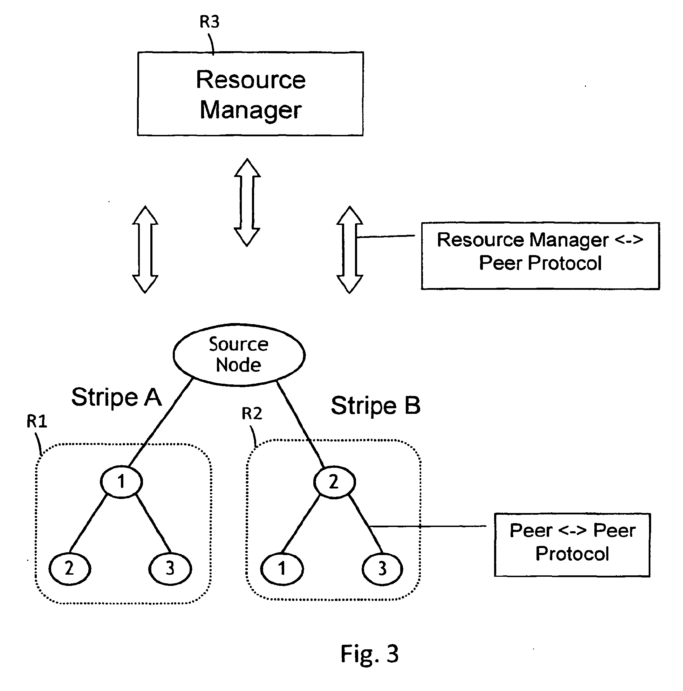

Fig. 3 illustrates a peer-to-peer network according to an embodiment of the invention. Basically, there are two instances in the peer-to-peer network: First, the resource manager instance R3 which is responsible for the tree building, and second, the peers which are finally distributing the content within a parallel tree structure comprising two parallel trees R1 and R2. The tree R1 is used for distributing stripe A of the content, and the tree R2 is used for distributing stripe B of the content. By using a parallel tree structure having two trees, pairs are forced to contribute their upload bandwidth. Moreover, a parallel tree structure provides faster content distribution and lower delay compared to a single distribution tree. In addition, there is typically no negation phase of each chunk before it gets streams as in Bit-Torrent like networks.

Each peer is assigned in one of the two trees R1, R2 the role of an interior node and is assigned in the respective other tree of the two trees R1, R2 the role of a leaf node.

A unique identifier (ID), preferably a unique identification number, is assigned to each peer (see IDs 1-3 in Fig. 3). More preferably, the ID is a consecutive number assigned to the peer according to the joining sequence. This ID determines the peer's position both the interior position in the one of the trees R1, R2 and the leaf position in the respective other tree R1, R2. The resource manager R3 is responsible for the allocation of the IDs to new peers. Another objective of the resource manager R3 is to compute based on the ID of the joining peer the peer's positions in the parallel trees R1, R2.

Two communication protocols are preferably used: a communication protocol for communication between the resource manager R3 and the peers, and a communication protocol for communication between the peers.

The integration of a joining peer into the parallel trees R1, R2 can basically be split up into two phases that the joining peer passes through. The first phase is to contact the resource manager R3 to receive the contact peer connection information for the two contact peers. The contact peer connection information indicates two join positions in the parallel trees. The second phase is to contact these contact peers. In the second phase, the joining peer typically also communicates the type of join to these contact peers and performs the joining procedure. Due to the usage of two peers, the new peer receives contact information for two contact peers.

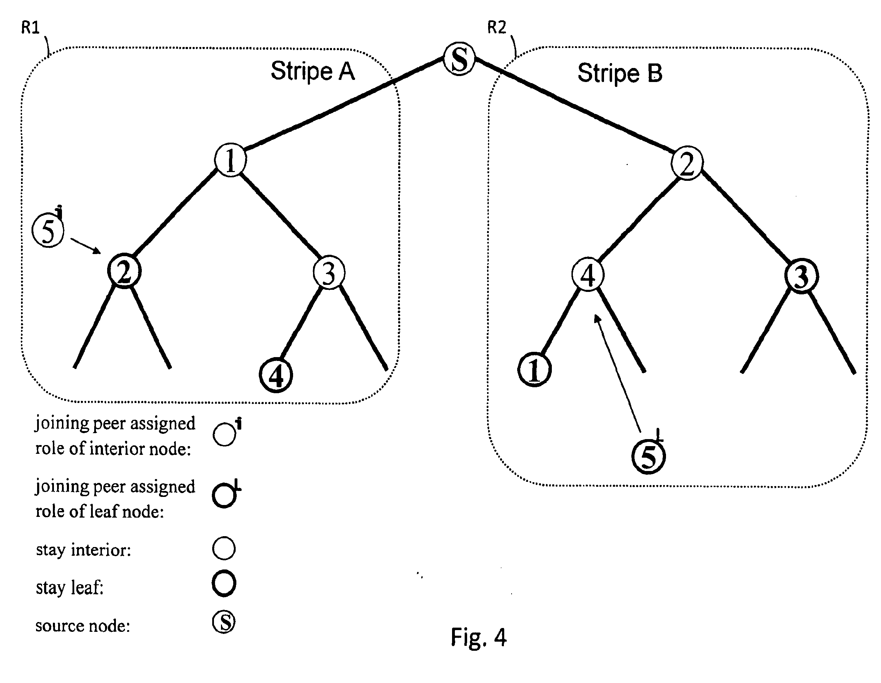

Fig. 4 illustrates joining of peer 5 in both trees R1 and R2. In tree R1, peer 5 is assigned the role of an interior node. In tree R2, peer 5 is assigned the role of a leaf node. Peer 5 contacts peer 2 in tree R1 (stripe A) to join in the role of an interior node and contacts peer 4 in the tree R2 (stripe B) to join in the role of a leaf node.

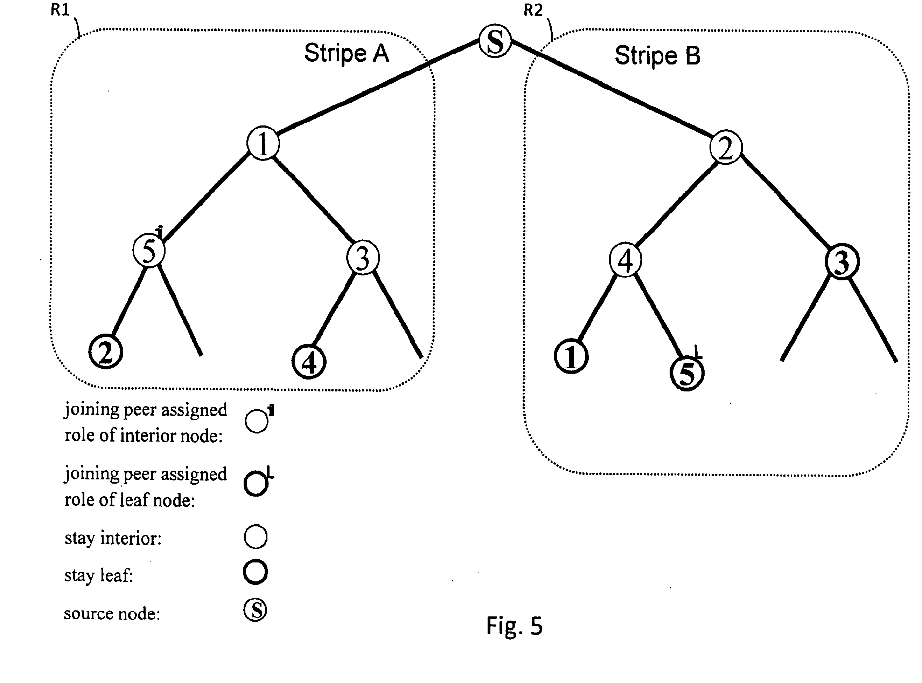

Fig. 5 illustrates the two parallel trees of Fig. 4 after peer 5 has joined the trees. In tree R1 peer 5 is assigned the role of an interior node, thus peer 5 replaced the contact peer 2 and peer 2 became a child node of peer 5. In tree R2 peer 5 is assigned the role of a leaf node, thus peer 5 became a child node of the contact peer 4.

In the following inventive algorithms for determining a contact peer are described:

Any peer contacts the resource manager R3 whenever it intends to join the parallel trees and receive content. The resource manager R3 determines an appropriate next joining position in every stripe the peer needs to join.

The resource manager R3 computes the joining position based on the ID of the joining peer. The joining position is represented by the contact peer and its connection information (i.e. the peer's address, e.g. peer ID, IP / Port, URL etc.). Due to the demand to form two parallel trees, each peer joins in both trees (i.e. both stripes). In tree R1 (e.g. stripe A distributed via the tree R1), the peer is assigned the role of an interior node and in the other tree R2 (e.g. stripe B distributed via the tree R2), this peer is assigned the role of a leaf node. Since the peer not only joins in the role of a leaf node but also joins in the role of an interior node, this way the peer is given the opportunity to help to distribute content to other peers of the network.

A peer joining tree R2 (i.e. stripe B) that is assigned the role of a leaf node in the tree R2 remains in the role of a leaf node in stripe B for the rest of the connection to the tree (please note that a peer that is assigned the role of a interior node and initially joins the last open leaf position in a tree level will later occupy an interior node after joining of further peers). Therefore, tree R2 (i.e. stripe B) would easily run out of free joining positions that are not blocked by any leaf peer. One the other side, joining as an interior node may also cause severe problems. The joining of an interior node moves at least one node to a deeper level of the tree. It also creates one open position (at the second child node position) that can be used by another node to receive content.

The following joining algorithm can be used for the joining of new peers: If a peer joined stripe A in the role of an interior node, the next peer joins stripe A in the role of a leaf node. Therefore, after a peer joined stripe A in the role of a leaf node, the following peer joins stripe A in the role of an interior node. This alternation sets up two parallel trees with a minimum depth and automatically creates open joining positions. These open positions may be used by other peers to join the tree.

There are different situations that may occur during joining of a peer; these can be broken down into three different type of joining scenarios. One should distinguish between a joining peer assigned the role of an interior node (the joining procedure thereof referred to as interior join) and a joining peer assigned the role of a leaf node (the joining procedure thereof referred to as leaf join). This is necessary because an interior join in most cases implies a rearrangement of at least one peer in the tree (this is typically not the case when the joining peer joins the last position in a tree level). A leaf join does not cause any rearrangements to the tree. Furthermore, there may be also two different scenarios for the interior join which will be explained in the following.

Leaf Join

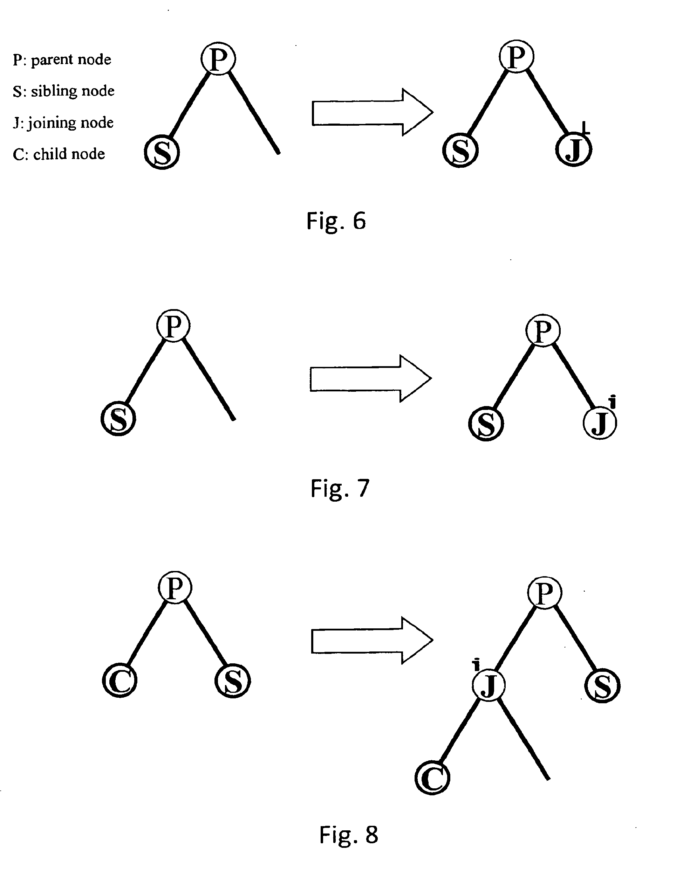

Fig. 6 shows the leaf join as the first joining scenario where joining peer J is assigned the role of leaf node. During a leaf join, the parent P of joining peer J should know that it has to forward the content to joining peer J. This parent peer P is called the contact peer of joining peer J.

This is the easiest type of joining into a tree because there is no rearrangement within the tree. Joining peer J asks contact peer P if it can "join as child" and receives the stripe's content (i.e. the part of the content distributed in the tree).

Interior Join I

The second joining scenario is similar to a leaf join although it has to be considered as an interior join. Fig. 7 shows the joining procedure. Joining peer J contacts its contact peer P and generates a request of "joining as child".Peer P accepts that request and forwards the data it receives on this stripe.

In case of alternately assigning the role of an interior node and the role of a leaf node, the situation as shown in Fig. 7 occurs every time when there is only one open possible peer position in the last tree level and this peer position has to be filled with a peer joining as an interior node. Although the joining peer forms a leaf node, joining peer J is assigned the role of an interior node (see superscript "i" for interior in Fig. 7) such that further peers may thereafter join the tree as child nodes of joining peer J.

Interior Join II

Fig. 8 illustrates an alternative interior join. In contrast to Fig. 7, in Fig. 8 the joining peer assigned the role of an interior node forms an interior node after joining. Such type of interior join may occur when there is no open peer position in the last tree level or more than one open peer position in the last tree level.

In Fig. 8, the peer J that joins as an interior node informs its parent P to forward the content of the stripe. Additionally, child C is informed by peer J that the parent peer is going to change. In case of an interior join as shown in Fig. 8, the child node C is the contact peer of joining peer J. Typically, the joining node J contacts as the first peer child peer C, with child peer C being located at the joining position. Nevertheless, it would be basically possible that the parent peer P is the contact peer. However, in the following it is assumed that the child peer C is the contact peer of joining peer J.

In most cases the peer that tries to join a tree in the role of an interior node is going to replace a leaf node. This is shown in the Fig. 8 as peer J replaces peer C. Joining peer J informs peer C that it is its new parent. In order to join the tree, peer J also contacts peer P to receive this peer's stripe content. Peer J also informs peer P that peer C is no longer a child of peer P.

After this joining procedure is finished, all participating peers should have updated their neighborhood, receive the stripe's content and forward this data if the peer is not a leaf node. In Fig. 8, the joining peer J receives all the stripe's content from its parent peer P and forwards it to its child peer C.

<u>Computing of the contact peer ID in case of one peer joining at a time</u>

The above remarks indicate that the joining position of a new peer within the tree R1, R2 can be described by the contact peer (and the type of joining scenario). The resource manager R3 as shown in Fig. 3 is used generate the contact peer ID of the joining peer at the joining position. Since the resource manager R3 determines the contact peer based on the ID of the joining peer itself, the joining algorithm can be broken down to convert the joining peer ID to the contact peer ID.

Determining the contact peer ID based on the joining peer ID is different for the interior and leaf join scenarios.

In order to keep the computing simple, the contact peer ID of a joining peer assigned the role of a leaf peer is its own ID minus one. Thus, the joining peer joins the particular tree as a child node of the last peer which joined the particular tree.

Due to the alternation of leaf and interior join, the resulting contact peer cannot be a peer assigned the role of leaf node and therefore it is able to forward content.

The following formula determines the contact peer identifier $C_{ID}$ of a leaf join based on the identifier of the joining peer $P_{ID}$:

$$C_{ID} = P_{ID} - 1 \qquad \text{(Eq. 1)}$$

For determining the contact peer ID of an interior join, the current depth of the tree is considered. In case the last level of the particular tree has only a single open position, the peer preferably joins the particular tree in the open position of the last level. The identifier $C_{ID}$ of the contact peer may be computed by the identifier of the joining peer $P_{ID}$ minus the number of peers that had been needed to fill the previous level of the tree (i.e. the last but one level of the tree). This can be expressed by the next formula:

$$C_{ID} = P_{ID} - 2^{level} \qquad \text{(Eq. 2)}$$

Here, the term "level" corresponds to the level difference between

- the last level of the particular tree and
- the initial level of the particular tree which contains a peer.

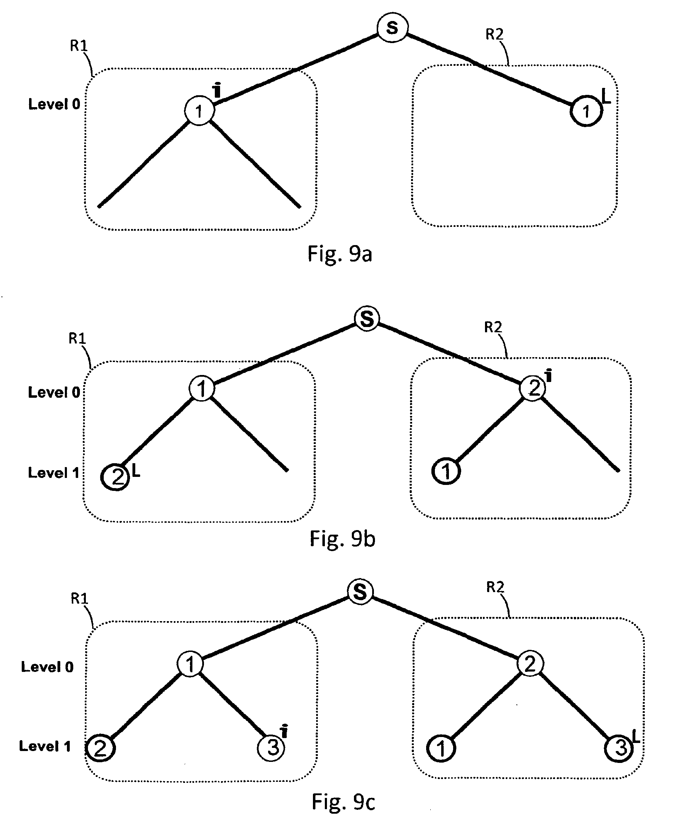

This formula is explained by way of various examples below with reference to Figs. 9a to 9i.

If the joining peer is not the last peer to fill a level of the tree, the peer preferably joins the particular tree

- in the position of the earliest joined leaf peer at a leaf node of the last level in case all positions in the last level are occupied or
- else in the position of the earliest joined leaf peer at a leaf node of the last but one level.

Such a joining position results, when the above formula is changed in the way that the subtrahend is decreased by 1, as shown next:

$$C_{ID} = P_{ID} - (2^{level} - 1) \qquad \text{(Eq. 3)}$$

Here, the term "level" corresponds to the level difference between

- the level of a child node of the node where the peer is going to join the particular tree and
- the initial level of the particular tree which contains a peer.

Also, this formula is explained by way of various examples below with reference to Figs. 9a to 9i.

Fig. 9a shows the joining of peer 1 (i.e. the peer with the identifier $P_{ID} = 1$) in level 0 of the two parallel trees R1 and R2. The joining of peer 1 is a special case where the formulas given above are not valid. Peer 1 joins level 0 of the left tree R1 in the role of an interior node (see superscript "i" for interior) and joins level 0 of the right tree R2 in the role of a leaf node (see subscript "L" for leaf).

Fig. 9b shows the joining of the next peer 2 (i.e. $P_{ID}$ = 2). Due to the role alternation, peer 2 joins in the right tree R2 in the role of an interior peer and replaces the position of the leaf peer 1. In the left tree R1, peer 2 join in the role of a leaf node. For the interior join, the contact peer $C_{ID}$ is computed based on Eq. 3, whereas for the leaf join, the contact peer $C_{ID}$ is computed based on Eq. 1:

$P_{ID}$ = 2
Level = 1
Interior join: $C_{ID}$ = 2-(2-1) = 1
Leaf join: $C_{ID}$ = 2-1= 1

Here, the term "level" in Eq. 3 corresponds to 1 which is the level difference between

- the level of a child node (here, the level 1) of the node where the peer is going to join the particular tree (here, the level 1) and
- the initial level (here, the level 0) of the particular tree which contains a peer.

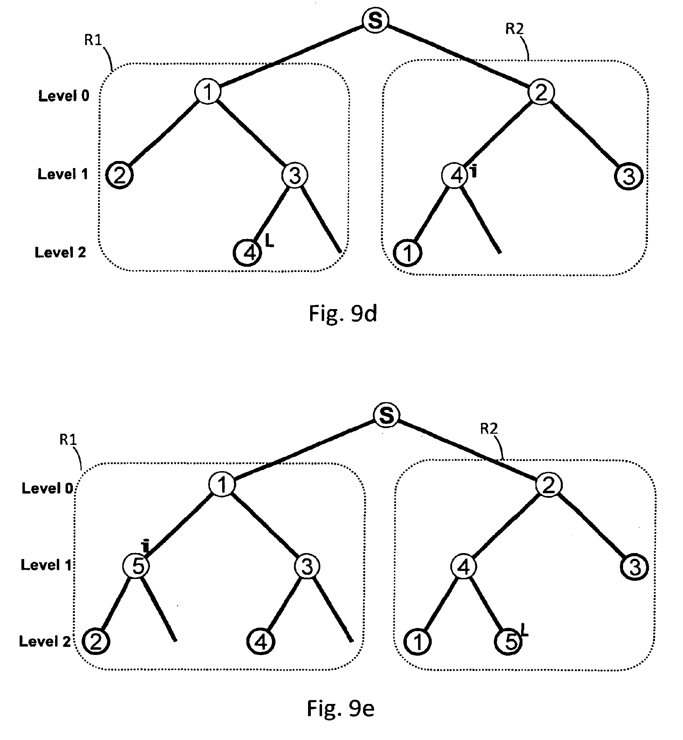

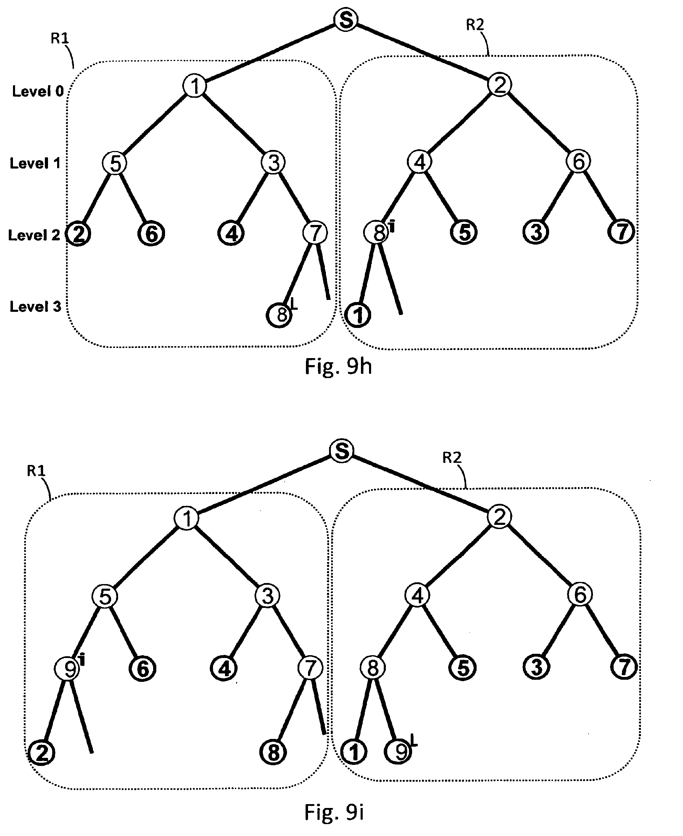

The level can be determined by a counter which is increased each time when a new tree level is to be used (since the last tree level is full), see Fig. 9d and Fig. 9h.

For the interior join, the leaf peer with the identifier $C_{ID}$ = 1 is contacted by the joining peer 2 and the joining peer 2 joins the tree R2 in the position of the contact peer 1, with the contact peer 1 thereafter forming a child node of peer 2.

Fig. 9c shows the joining of the next peer 3 (i.e. $P_{ID}$ = 3). Peer 3 joins the left tree R1 as an interior peer. Since the tree has only one position left in the last tree level 1, peer 3 joins the last open position in the last level. For the interior join, the contact peer $C_{ID}$ is computed based on Eq. 2 (and not based on Eq. 3 since there is only a single open position in the last tree level), whereas for the leaf join, the contact peer $C_{ID}$ is computed based on Eq. 1:

$P_{ID}$ = 3 (last peer in level)
level = 1
interior join: $C_{ID}$ = 3 - 2 = 1
leaf join: $C_{ID}$ = 3 - 1= 2

For the interior join, peer 1 is contacted and the joining peer 3 forms a child node of this contact peer 1 (the contact peer 1 is not replaced by the joining peer 3).

Fig. 9d shows the joining of the next peer 4 (i.e. $P_{ID}$ = 4). Peer 4 joins the right tree R2 as an interior peer.

For the interior join, the contact peer $C_{ID}$ is computed based on Eq. 3, whereas for the leaf join, the contact peer $C_{ID}$ is computed based on Eq. 1:

$P_{ID}$ = 4
level = 2 (level increased)
interior join: $C_{ID}$ = 4 - (4-1) = 1
leaf join: $C_{ID}$=4-1=3

As illustrated in Fig. 9d, peer 4 joins tree R2 in the position of the earliest joined leaf peer (here: peer 1) of the last level (before joining, the last level is level 1), whereas peer 4 joins the tree R1 as a child node of the last peer which joined the tree R1 (here: peer 3).

Fig. 9e shows the joining of the next peer 5 (i.e. $P_{ID}$ = 5). Peer 5 joins the left tree R1 as an interior peer.

For the interior join, the contact peer $C_{ID}$ is computed based on Eq. 3, whereas for the leaf join, the contact peer $C_{ID}$ is computed based on Eq. 1:

$P_{ID}$ = 5
level = 2
interior join: $C_{ID}$ = 5 - (4-1) = 2
leaf join: $C_{ID}$ = 5 - 1= 4

As illustrated in Fig. 9e, peer 5 joins in tree R1 in the position of the earliest joined leaf peer (here: peer 2) of the last but one level (here: level 1), whereas peer 5 joins the tree R2 as a child node of the last peer which joined the tree R2 (here: peer 4).

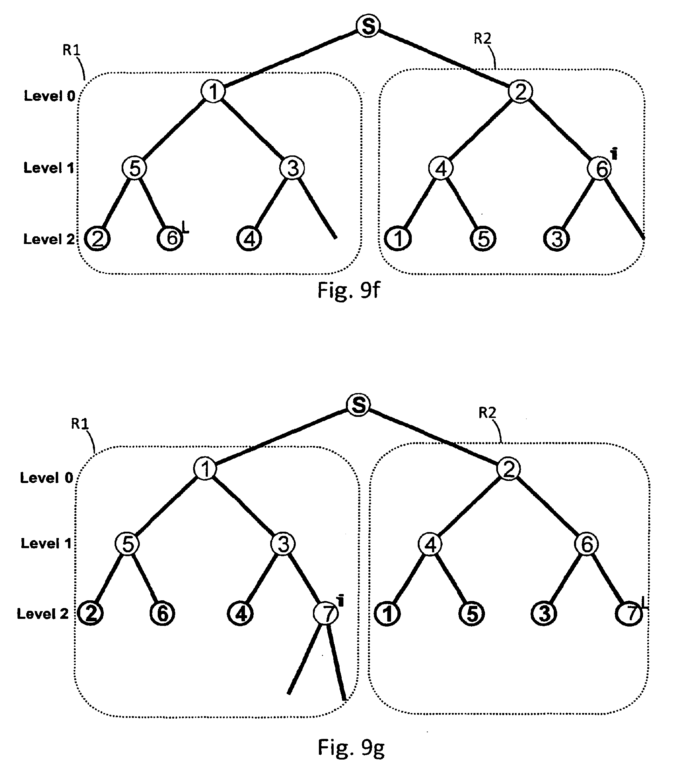

Fig. 9f shows the join ing of the next peer 6 (i.e. $P_{ID}$ = 6). Peer 6 joins the right tree R2 as an interior peer. For the interior join, the contact peer $C_{ID}$ is computed based on Eq. 3, whereas for the leaf join, the contact peer $C_{ID}$ is computed based on Eq. 1:

$P_{ID}$ = 6
level = 2
interior join: $C_{ID}$ = 6 - (4-1) = 3
leaf join: $C_{ID}$ = 6 - 1= 5

As illustrated in Fig. 9f, peer 6 joins the right tree R2 in the position of the earliest joined leaf peer (here: peer 3) of the last but one level (the last but one level is level 1), whereas peer 6 joins tree R1 as a child node of the last peer which joined tree R1 (here: peer 5).

Fig. 9g shows the joining of the next peer 7 (i.e. $P_{ID}$ = 7). Peer 7 joins in the left tree R1 as an interior peer. Since the last level of the tree has only one open position, peer 7 occupies the last open position in this tree level.

For the interior join, the contact peer $C_{ID}$ is computed based on Eq. 2 (and not based on Eq. 3 since there is only a single open position in the last tree level), whereas for the leaf join, the contact peer $C_{ID}$ is computed based on Eq. 1:

$P_{ID}$ = 7 (last peer in level)
level = 2
interior join: $C_{ID}$ = 7 - 4 = 3
leaf join: $C_{ID}$ = 7-1= 6

For the interior join, peer 3 is contacted and joining peer 7 forms a child node of this contact peer 3 (the contact peer 3 is not replaced by the joining peer 7).

Fig. 9h shows the joining of the next peer 8 (i.e. $P_{ID}$ = 8). Peer 8 joins the right tree R2 as an interior peer.

For the interior join, the contact peer $C_{ID}$ is computed based on Eq. 3, whereas for the leaf join, the contact peer $C_{ID}$ is computed based on Eq. 1:

$P_{ID}$ = 8
level = 3 (level increased)
interior join: $C_{ID}$ = 8 - (8-1) = 1
leaf join: $C_{ID}$ = 8 -1= 7

As illustrated in Fig. 9h, peer 8 joins tree R2 in the position of the earliest joined leaf peer (here: peer 1) of the last level (before joining, the last level is level 2), whereas peer 8 joins the tree R1 as a child node of the last peer which joined the tree R1 (here: peer 7).

Fig. 9i shows the joining of the next peer 9 (i.e. $P_{ID}$ = 9). Peer 9 joins the left tree R1 as an interior peer.

For the interior join, the contact peer $C_{ID}$ is computed based on Eq. 3, whereas for the leaf join, the contact peer $C_{ID}$ is computed based on Eq. 1:

$P_{ID}$ = 9
level = 3
interior join: $C_{ID}$ = 9 - (8-1) = 2
leaf join: $C_{ID}$ = 9 - 1= 8

As illustrated in Fig. 9i, peer 9 joins in tree R1 in the position of the earliest joined leaf peer (here: peer 2) of the last but one level (here: level 2), whereas peer 9 joins tree R2 as a child node of the last peer which joined the tree R2 (here: peer 8).

In the joining algorithm as outlined in Fig. 9a-i the peers going to join are alternately assigned in a particular of the trees (e.g. in tree R1) the role of an interior node and the role of a leaf node. E.g. in Fig. 9a peer 1 is assigned in tree R1 the role of an interior node, in Fig. 9b peer 2 is assigned in tree R1 the role of a leaf node and in Fig. 9c peer 3 is assigned in tree R1 the role of an interior node. The peers typically join one after another.

In the following, a method for building up two parallel trees is presented where two peers may join at a time (nevertheless, the peers may join one after another). Here, the peers going to join are alte nately assigned 2-times the role of a leaf node and 2-times the role of an interior node. Also, in this joining algorithm the equations for computing the contact peers are different to the Eq. 1-3 used for the joining of one peer at a time as discussed above.

In contrast to the Eq. 1, in the equation for joining of two peers at time the peer's position identifier differs by two. Therefore, a joining peer e.g. at position 7 (i.e. $P_{ID} = 7$) does not have to wait until the joining peer at the position 6 (i.e. $P_{ID} = 6$) has joined since the contact peer for peer 7 in case of a leaf join is peer 5 (and not peer 6). This peer 5 is necessarily an interior node (due to the role assignment scheme).

In detail, the following equation determines the contact peer identifier $C_{ID}$ of a leaf join based on the identifier $P_{ID}$ of the joining peer:

$$C_{ID} = P_{ID} - 2 \qquad\qquad (Eq.\ 4)$$

The contact peer identifier $C_{ID}$ of an interior join is determined according to the following equation:

$$C_{ID} = P_{ID} - (2^{level} - 2) \qquad\qquad (Eq.\ 5)$$

Here, the term "level" corresponds to the level difference between

- the level of a child node of the node where the peer is going to join the particular tree and
- the initial level of the particular tree which contains a peer.

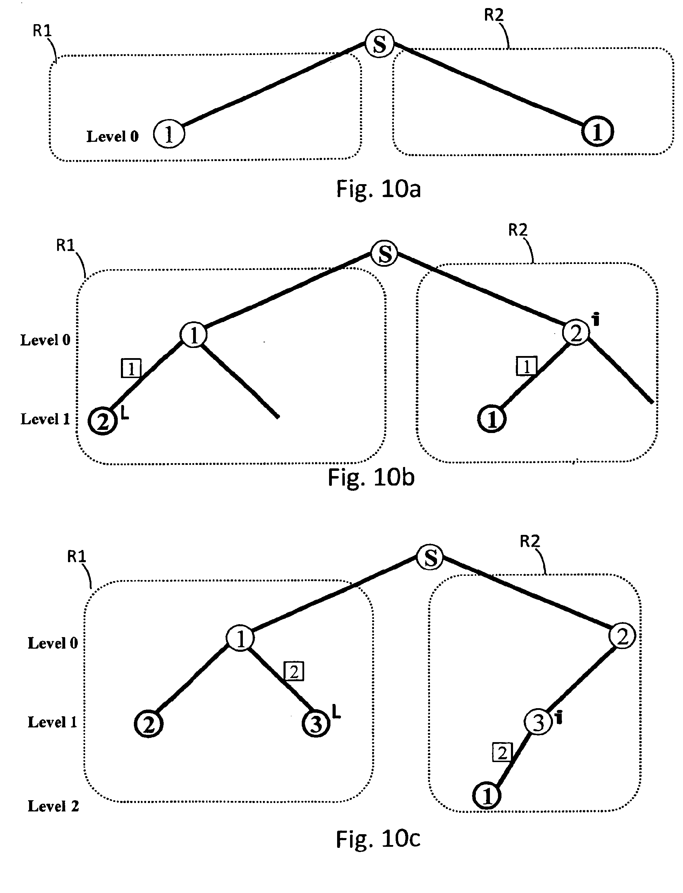

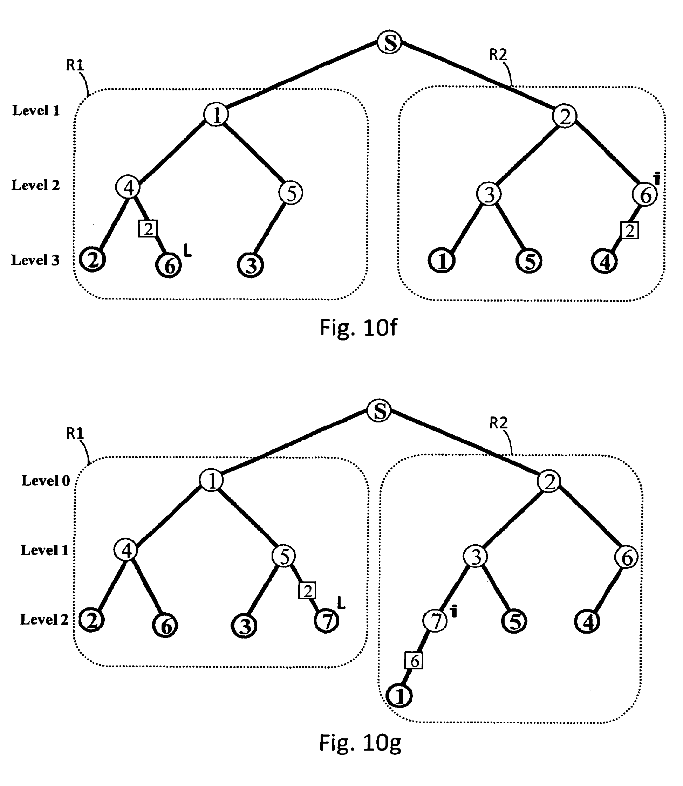

The value for the term "level" may be determined by identifying the last peer of the level of the tree where the peer joins as a leaf node. If this is detected: With this join the value of the term "level" is increased by one. Thus, the value for the term "level" is increased by one before the last peer joins as a leaf node in the last level of the tree (see Fig. 10c, where the value for the term "level" is increased in comparison to Fig. 10b and where peer 3 joins tree R1 as a leaf node in the last position of the level; see Fig. 10g, where the value for the term "level" is increased in comparison to Fig. 10f and peer 7 joins tree R1 as a leaf node in the last position of the level). The value for the term "level" is increased directly before a new tree level is started by joining of a peer as an interior node (see new level 3 started in Fig. 10g by joining of peer 7 as an interior node).

It should be noted that the above Eq. 4-5 allows joining of two peers at a time; nevertheless, Eq. 4-5 may be used for a joining scenario where one peer joins at a time.

Fig. 10a shows joining of the first peer 1 ($P_{ID} = 1$). The joining of the first peer forms a special case which is not considered by Eq. 4-5. The term "level" is set to 0. Peer 1 joins in tree R1 in the role of an interior node and joins in the tree R2 in the role of a leaf node.

Fig. 10b shows the joining of the second peer 2 ($P_{ID} = 2$). The joining of the second peer forms a special case which is not considered by Eq. 4-5; for the interior join in tree R2, the contact peer $C_{ID}$ is computed based on Eq. 3, whereas for the leaf join in tree R1, the contact peer $C_{ID}$ is computed based on Eq. 1:

$P_{ID} = 2$
level = 1
interior join: $C_{ID} = 2 - 1 = 1$
leaf join: Chid = 2 -1= 1

In Fig. 10b, the boxed numbers indicate the difference (here: 1 for the leaf join and 1 for the interior join) between the identifiers of the contact peers and the identifier of the joining peer.

Fig. 10c shows the joining of the third peer 3 (pied = 3). Starting from the third peer, the contact peers are determined based on Eq. 4 and 5; for the interior join in tree R2, the contact peer $C_{ID}$ is computed based on Eq. 5, whereas for the leaf join in tree R1, the contact peer $C_{ID}$ is computed based on Eq. 4:

$P_{ID} = 3$
level = 2 (level increased since peer 3 is the last peer in level 1 of tree R1) interior join: $C_{ID} = 3 - 2 = 1$
leaf join: $C_{ID} = 3 - 2 = 1$

In Fig. 10c, the boxed numbers indicate the difference (here: 2 for the leaf join and 2 for the interior join) between the identifiers of the contact peers and the identifier of the joining peer.

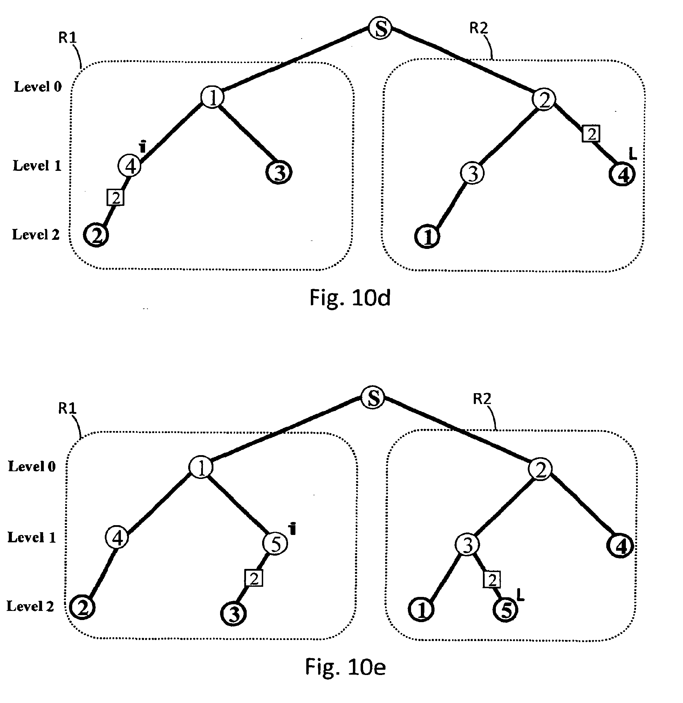

Fig. 10d shows the joining of peer 4 ($P_{ID} = 4$). For the interior join in tree R1, the contact peer $C_{ID}$ is computed based on Eq. 5, whereas for the leaf join in tree R2, the contact peer $C_{ID}$ is computed based on Eq. 4:

$P_{ID}$ = 4
level = 2
interior join: $C_{ID}$ = 4 - 2 = 2
leaf join: $C_{ID}$ = 4 - 2 = 2

Fig. 10e shows the joining of peer 5 ($P_{ID}$ = 5). For the interior join in tree R1, the contact peer $C_{ID}$ is computed based on Eq. 5, whereas for the leaf join in tree R2, the contact peer $C_{ID}$ is computed based on Eq. 4:

$P_{ID}$ = 5
level = 2
interior join: $C_{ID}$ = 5 - 2 = 3
leaf join: $C_{ID}$ = 5 - 2 = 3

As evident from Figs. 10b-10e, the peer joining tree R2 are alternately assigned in the particular tree 2-times the role of an interior node (see Figs. 10b-c) and 2-times the role of leaf node (see Figs. 10d-e). The peers join the other tree R1 in the respective other role.

A pair of peers with consecutive IDs (e.g. peers 2 and 3 or peers 3 and 4) may join the parallel trees at the same time. E.g. peer 3 (or peer 4) does not have to wait until peer 2 (peer 3) has joined since the identifier of the contact peer for the leaf join differs by two. This contact peer is automatically an interior node due to specific role assignment scheme, where the joining peers are alternately assigned in a tree 2-times the role of an interior node and 2-times the role of leaf node. It should be noted that here two peers may with consecutive IDs may join at time; nevertheless, the peers may also join one after another in such a way that the next peer joins when the previous has completed its join.

Fig. 10f shows the joining of peer 6 (PIDD= 6). For the interior join in tree R2, the contact peer $C_{ID}$ is computed based on Eq. 5, whereas for the leaf join in tree R1, the contact peer $C_{ID}$ is computed based on Eq. 4:

$P_{ID}$ = 6
level = 2
interior join: $C_{ID}$ = 6 - 2 = 4
leaf join: $C_{ID}$ = 6 - 2 = 4

Fig. 10g shows the joining of peer 7 ($P_{ID}$ = 7). For the interior join in tree R2, the contact peer $C_{ID}$ is computed based on Eq. 5, whereas for the leaf join in tree R1, the contact peer $C_{ID}$ is computed based on Eq. 4:

$P_{ID}$ = 7
level = 3 (level increased since peer 7 is the last peer in level 2 of tree R1) interior join: $C_{ID}$ = 7 - 6 = 1
leaf join: $C_{ID}$ = 7 - 2 = 5

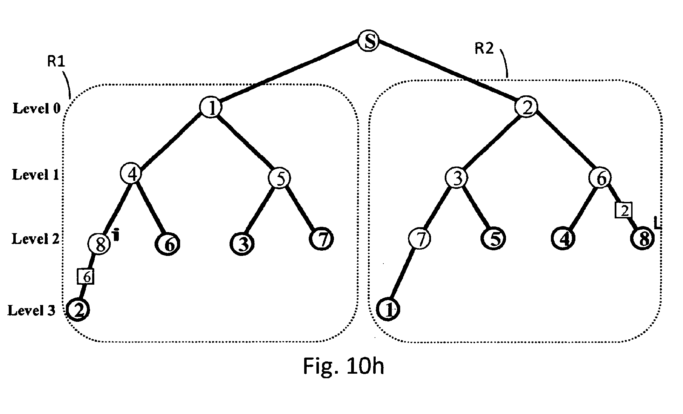

Fig. 10h shows the joining of peer 8 ($P_{ID}$ = 8). For the interior join in tree R1, the contact peer $C_{ID}$ is computed based on Eq. 5, whereas for the leaf join in tree R2, the contact peer $C_{ID}$ is computed based on Eq. 4:

$P_{ID}$ = 8
level = 3
interior join: $C_{ID}$ = 8 - 6 = 2
leaf join: $C_{ID}$ = 8 - 2 = 6

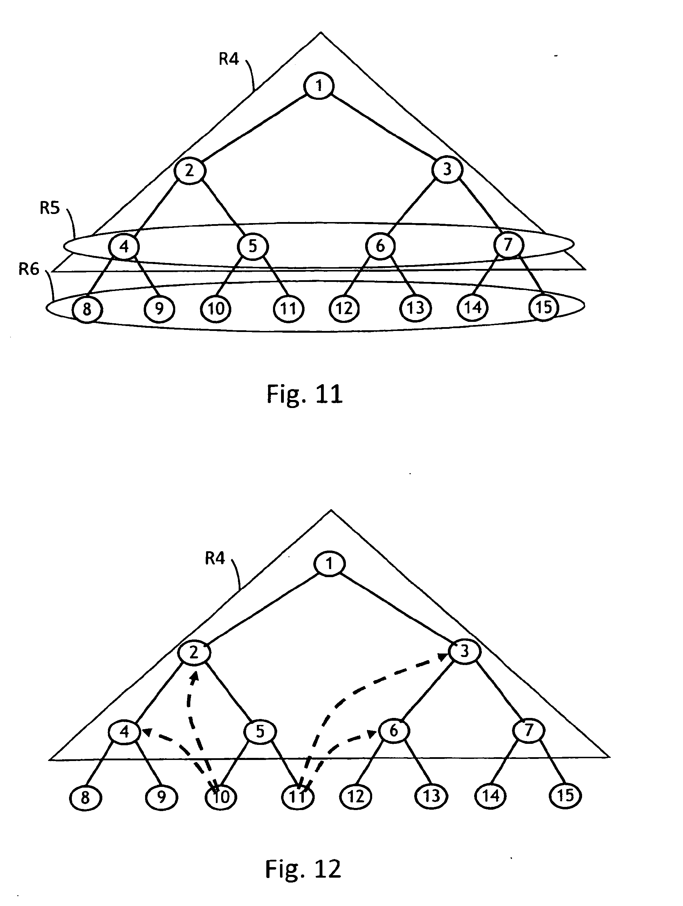

Fig. 11 relates to an embodiment of the failure recovery method according to a different aspect of the application. The failure recovery method increases the robustness of a tree structure for content distribution (e.g. a binary parallel streaming tree) since the method bridges and recovers failed peers.

Fig. 11 illustrates a constructed binary tree of two parallel trees or alternatively only a cut-out of such tree. The triangle encloses a node recovery space R4 for peers (see peers 8-15) which are located in the last level of the tree or cut-out in Fig. 11. The peers at the last level (peer 8-15) know all nodes located in the space enclosed by the triangle, i.e. all nodes in the recovery space.

If a parent peer 4-7 in the parent peer group R5 within the triangle fails, one or more of the affected child peers 8-15 of the group R6 of child peers can connect to other peers (see peers 1-7) within the recovery area R4 such that lost streaming content during the failure phase of the parent peer can be retransmitted. In a so called pre-failure phase, the child peers 8-15 try to pre-establish redundant links to peers selected out of this node recovery space R4.

Fig. 12 shows the pre-establishing of links of peers 10 and 11. This allows after failure of peer 5 to request missing packets not received from peer 5. In Fig. 11, peers 10 and 11 have redundant links e.g. to peers 2, 4 and peers 3, 6. These pre-established links can be used to get missed content if the parent peer 5 crashes.

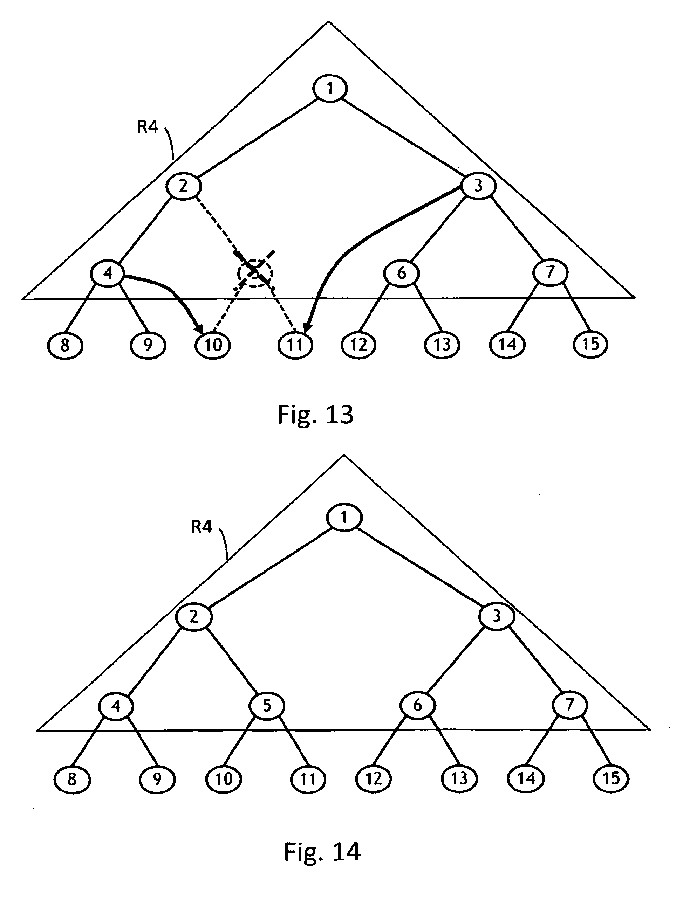

Fig. 13 shows the situation when one of the parent peers, here peer 5, fails. The affected peers 10 and 11 try to get a retransmission of missed streaming content from other connected peers enclosed by the triangular recovery space R4. As these peers 10 and 11 have pre-established links to peers 2, 4 and peers 3, 6, respectively, each of peers 10 and 11 chooses one of the links and receives the current and future content by the selected peer (here: peers 4 and 3). This is done as long as a new joining peer fills again the tree position 5 (as shown in Fig .14).

It should be noted that preferably peers in the lower part of the recovery area R4 are selected for providing the content. This is due to the fact that the memory requirements are lower for the peers in the lower part.

In Fig. 14, a new peer joined at tree position 5. Hence, peer 2 streams as usual the content to the new joined peer 5, and peer 5 distributes the content to peers 10 and 11.

When using the failure recovery mechanism in a tree structure using parallel trees, it should be noted that if peer 5 fails as an interior node in one stripe of the binary parallel tree, peer 5 is a leaf node at the other stripe. Hence, as leaf node no reorganization or failure mechanisms is needed in the other stripe of the tree structure.

## Claims

1.  A method for building up two parallel distribution trees (R1, R2) for distributing content from one or more source nodes to peers of a peer-to-peer-network, the first tree (R1) associated to a first part of the content and the second tree (R2) associated to a second part of the content, and each peer of a plurality of peers being assigned in a respective tree of the two trees the role of an interior node and being assigned in the respective other tree of the two trees the role of a leaf node, **characterised in that** peers going to join a particular tree (R1, R2) of the two trees are alternately assigned in the particular tree (R1, R2)

      - the role of an interior node and the role of a leaf node or
      - n-times the role of an interior node and n-times the role of leaf node, with $n \geq 2$.

2.  The method of claim 1, wherein

      - in case a peer going to join a particular tree of the two trees (R1, R2) is assigned the role of an interior node, this peer is assigned the role of a leaf node in the respective other tree (R1, R2), and
      - in case a peer going to join a particular tree of the two trees (R1, R2) is assigned the role of a leaf node, this peer is assigned the role of an interior node in the respective other tree.

3.  The method of claim 1, wherein

      - peers going to join a particular tree of the two trees (R1, R2) are alternately assigned in the particular tree the role of an interior node and the role of a leaf node; and
      - in case a peer going to join a particular tree of the two trees (R1, R2) is assigned the role of a leaf node, this peer joins the particular tree as a child node of the last peer.

4.  The method of claim 1, wherein peers going to join a particular tree of the two trees (R1, R2) are alternately assigned in the particular tree the role of an interior node and the role of a leaf node, and in case

      - a peer going to join a particular tree of the two trees (R1, R2) is assigned the role of an interior node and
      - the last level of the particular tree has no open positions or more than one open peer position,

      this peer joins the particular tree

      - in the position of the earliest joined leaf peer at a leaf node of the last level in case all positions in the last level are occupied or
      - else in the position of the earliest joined leaf peer at a leaf node of the last but one level.

5.  The method of claim 1, wherein peers going to join a particular tree of the two trees (R1, R2) are alternately assigned in the particular tree the role of an interior node and the role of a leaf node, and in case

      - a peer going to join a particular tree of the two trees (R1, R2) is assigned the role of an interior node and
      - the last level of the particular tree has only a single open position, this peer joins the particular tree (R1, R2) in the open position of the last level.

6. The method of claim 1, wherein

- a contact peer in a tree is determined for a peer going to join a particular tree (R1, R2); and
- in case a peer going to join the particular tree (R1, R2) is assigned the role of a leaf node, this peer contacts its associated contact peer in the particular tree and joins the particular tree (R1, R2) as a child node of the contact peer in a leaf position.

7. The method of claim 1, wherein peers going to join a particular tree of the two trees (R1, R2) are alternately assigned in the particular tree the role of an interior node and the role of a leaf node, and

- in case

- a peer going to join a particular tree of the two trees (R1, R2) is assigned the role of an interior node and
- the last level of the particular tree (R1, R2) has no open positions or more than one open peer position,

this peer contacts an associated contact peer and joins the particular tree (R1, R2) in the position of the contact peer, with the contact peer thereafter forming a child node of the joined peer; and
- in case

- a peer going to join a particular tree of the two trees (R1, R2) is assigned the role of an interior node and
- the last level of the particular tree (R1, R2) has only a single open position,

this peer contacts its associated contact peer in the particular tree (R1, R2) and joins the particular tree as a child node of the contact peer in a leaf position.

8. The method of claim 1, wherein a contact peer in a tree (R1, R2) is determined for a peer going to join this tree (R1, R2) based on an identifier of the peer going to join the tree (R1, R2).

9. The method of claim 8, wherein

- peers going to join a particular tree of the two trees (R1, R2) are alternately assigned in the particular tree the role of an interior node and the role of a leaf node,
- the identifier is an identification number in form of a consecutive number,
- determining a contact peer comprises determining an identification number of the contact peer,
- in case a peer going to join a particular tree of the two trees (R1, R2) is assigned the role of a leaf node, the identification number of the contact peer corresponds to the identification number of the peer going to join minus one.

10. The method of claim 8, wherein

- peers going to join a particular tree of the two trees (R1, R2) are alternately assigned in the particular tree (R1, R2) the role of an interior node and the role of a leaf node,
- the identifier is an identification number in form of a consecutive number,
- determining a contact peer comprises determining an identification number of the contact peer,
- in case

- a peer going to join a particular tree of the two trees (R1, R2) is assigned the role of an interior node and
- the last level of the particular tree has no open positions or more than one open peer position,
the identification number of the contact peer corresponds to

$$\mathrm{P_{ID}} - (2^{level} - 1),$$

wherein the term "$\mathrm{P_{ID}}$" denotes the identification number of the joining peer, and the term "level" corresponds to the level difference between

- the level of a child node of the node where the peer is going to join the particular tree (R1, R2) and
- the initial level of the particular tree (R1, R2) which contains a peer.

**11.** The method of claim 8, wherein

- peers going to join a particular tree of the two trees (R1, R2) are alternately assigned in the particular tree the role of an interior node and the role of a leaf node,
- the identifier is an identification number in form of a consecutive number,
- determining a contact peer comprises determining an identification number of the contact peer,
- in case

- a peer going to join a particular tree of the two trees (R1, R2) is assigned the role of an interior node and
- the last level of the particular tree has only a single open position,
the identification number of the contact peer corresponds to

$$\mathbf{P}_{ID} - 2^{level},$$

wherein the term "$P_{ID}$" denotes the identification number of the joining peer, and the term "level" corresponds to the level difference between
- the last level of the particular tree (R1, R2) and
- the initial level of the particular tree (R1, R2) which contains a peer.

**12.** The method of claim 1, wherein

- a resource manager (R3) is contacted by a peer going to join a particular tree (R1, R2);
- the resource manager (R3) determines a contact peer in the particular tree (R1, R2) for the peer going to join the tree;
- the resource manager (R3) transmits information about the contact peer to the peer going to join the tree (R1, R2); and
- the peer going to join the particular tree contacts the contact peer based on the transmitted information.

**13.** The method of claim 8, wherein

- n = 2,
- the identifier is an identification number in form of a consecutive number,
- determining a contact peer comprises determining an identification number of the contact peer,
- in case a peer going to join the particular tree (R1, R2) is assigned the role of a leaf node, the identification number of the contact peer corresponds to the identification number of the peer going to join minus two.

**14.** The method of claim 8, wherein

- n = 2,
- the identifier is an identification number in form of a consecutive number,
- determining a contact peer comprises determining an identification number of the contact peer,
- in case a peer going to join the particular tree is assigned the role of an interior node, the identification number of the contact peer corresponds to

$$\mathbf{P}_{ID} - (2^{level} - 2),$$

wherein the term "$P_{ID}$" denotes the identification number of the peer going to join, and the term "level" corresponds to the level difference between

- the level of a child node of the node where the peer is going to join the particular tree (R1, R2) and
- the initial level of the particular tree (R1, R2) which contains a peer.

**15.** The method of any of claims 13 or 14, wherein two peers in parallel join the particular tree (R1, R2) at a time.

**16.** A resource manager (R3) for building up two parallel trees (R1, R2) according to the method of claim 1.

**17.** A peer-to-peer network, comprising

- a resource manager (R3) according to claim 16.

**Patentansprüche**

**1.** Verfahren zum Aufbau von zwei parallelen Verteilungsbäumen (R1, R2) für das Verteilen von Inhalt von einem oder mehreren Quellknoten an Peers eines Peer-to-Peer-Netzwerks, wobei der erste Baum (R1) mit einem ersten Teil des Inhalts assoziiert ist und der zweite Baum (R2) mit einem zweiten Teil des Inhalts assoziiert ist, und wobei einem jeden Peer einer Mehrzahl von Peers in einem jeweiligen Baum der zwei Bäume die Rolle eines inneren Knotens und in dem jeweiligen anderen Baum der zwei Bäume die Rolle eines Blattknotens zugewiesen wird, **dadurch gekennzeichnet, dass** Peers, die im Begriff sind, sich in einen bestimmten Baum (R1, R2) der zwei Bäume einzufügen, in dem bestimmten Baum (R1, R2), abwechselnd zugewiesen wird:

- die Rolle eines inneren Knotens und die Rolle eines Blattknotens, oder
- n-mal die Rolle eines inneren Knotens und n-mal die Rolle eines Blattknotens, wobei n $\geq 2$ ist.

**2.** Verfahren nach Anspruch 1, wobei

- wenn einem Peer, der im Begriff ist, sich in einen bestimmten Baum der zwei Bäume (R1, R2) einzufügen, die Rolle eines inneren Knotens zugewiesen wird, diesem Peer die Rolle eines Blattknotens in dem jeweiligen anderen Baum (R1, R2) zugewiesen wird, und
- wenn einem Peer, der im Begriff ist, sich in einen bestimmten Baum der zwei Bäume (R1, R2) einzufügen, die Rolle eines Blattknotens zugewiesen wird, diesem Peer die Rolle eines inneren Knotens in dem jeweiligen anderen Baum zugewiesen wird.

**3.** Verfahren nach Anspruch 1, wobei

- Peers, die im Begriff sind, sich in einen bestimmten Baum der zwei Bäume (R1, R2) einzufügen, in dem bestimmten Baum abwechselnd die Rolle eines inneren Knotens und die Rolle eines Blattknotens zugewiesen wird; und
- wenn einem Peer, der im Begriff ist, sich in einen bestimmten Baum der zwei Bäume (R1, R2) einzufügen, die Rolle eines Blattknotens zugewiesen wird, dieser Peer sich als Kindknoten des letzten Peers in den bestimmten Baum einfügt.

**4.** Verfahren nach Anspruch 1, wobei Peers, die im Begriff sind, sich in einen bestimmten Baum der zwei Bäume (R1, R2) einzufügen, in dem bestimmten Baum abwechselnd die Rolle eines inneren Knotens und die Rolle eines Blattknotens zugewiesen wird, und wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums keine offenen Positionen oder mehr als eine offene Peer-Position aufweist,

dieser Peer sich

- in der Position des zuerst eingefügten Blatt-Peers an einem Blattknoten der letzten Ebene, wenn alle Positionen in der letzten Ebene belegt sind, oder
- anderenfalls in der Position des zuerst eingefügten Blatt-Peers an einem Blattknoten der vorletzten Ebene

in den bestimmten Baum einfügt.

**5.** Verfahren nach Anspruch 1, wobei Peers, die im Begriff sind, sich in einen bestimmten Baum der zwei Bäume (R1, R2) einzufügen, in dem bestimmten Baum abwechseln die Rolle eines inneren Knotens und die Rolle eines Blattknotens zugewiesen wird, und wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums nur eine einzige offene Position aufweist, dieser Peer sich in der offenen Position der letzten Ebene in den bestimmten Baum (R1, R2) einfügt.

6. Verfahren nach Anspruch 1, wobei

- für einen Peer, der im Begriff ist, sich in einen bestimmten Baum (R1, R2) einzufügen, ein Kontakt-Peer in einem Baum bestimmt wird; und
- wenn einem Peer, der im Begriff ist, sich in einen bestimmten Baum (R1, R2) einzufügen, die Rolle eines Blattknotens zugewiesen wird, dieser Peer seinen zugeordneten Kontakt-Peer in dem bestimmten Baum kontaktiert und sich als ein Kindknoten des Kontakt-Peers in einer Blattposition in den bestimmten Baum (RA, R2) einfügt.

7. Verfahren nach Anspruch 1, wobei Peers, die im Begriff sind, sich in einen bestimmten Baum der zwei Bäume (R1, R2) einzufügen, in dem bestimmten Baum abwechseln die Rolle eines inneren Knotens und die Rolle eines Blattknotens zugewiesen wird, und

- wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums (RA, R2) keine offenen Positionen oder mehr als eine offene Peer-Position aufweist,

dieser Peer einen zugeordneten Kontakt-Peer kontaktiert und sich in der Position des Kontakt-Peers in den bestimmten Baum (R1, R2) einfügt, wobei der Kontakt-Peer anschließend einen Kindknoten des eingefügten Peers bildet; und
- wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums (R1, R2) nur eine einzige offene Position aufweist,

dieser Peer seinen zugeordneten Kontakt-Peer in dem bestimmten Baum (R1, R2) kontaktiert und sich als ein Kindknoten des Kontakt-Peers in einer Blattposition in diesen bestimmten Raum einfügt.

8. Verfahren nach Anspruch 1, wobei für einen Peer, der im Begriff ist, sich in diesen Baum (R1, R2) einzufügen, ein Kontakt-Peer in einem Baum (R1, R2) auf der Basis einer Kennung des Peers, der im Begriff ist, sich in den Baum (R1, R2) einzufügen, bestimmt wird.

9. Verfahren nach Anspruch 8, wobei

- Peers, die im Begriff sind, sich in einen bestimmten Baum der zwei Bäume (R1, R2) einzufügen, in dem bestimmten Baum abwechseln die Rolle eines inneren Knotens und die Rolle eines Blattknotens zugewiesen wird,
- die Kennung eine Identifikationsnummer in der Form einer Laufzahl ist,
- das Bestimmen eines Kontakt-Peers das Bestimmen einer Identifikationsnummer des Kontakt-Peers umfasst,
- wenn einem Peer, der im Begriff ist, sich in einen bestimmten Baum der zwei Bäume (R1, R2) einzufügen, die Rolle eines Blattknotens zugewiesen wird, die Identifikationsnummer des Kontakt-Peers der Identifikationsnummer des Peers, der im Begriff ist, sich einzufügen, minus eins entspricht.

10. Verfahren nach Anspruch 8, wobei

- Peers, die im Begriff sind, sich in einen bestimmten Baum der zwei Bäume (R1, R2) einzufügen, in dem bestimmten Baum (R1, R2) abwechselnd die Rolle eines inneren Knotens und die Rolle eines Blattknotens zugewiesen wird,
- die Kennung eine Identifikationsnummer in der Form einer Laufzahl ist,
- das Bestimmen eines Kontakt-Peers das Bestimmen einer Identifikationsnummer des Kontakt-Peers umfasst,
- wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums keine offenen Positionen oder mehr als eine offene Peer-Position aufweist,
die Identifikationsnummer des Kontakt-Peers

$$P_{ID} - (2^{level} - 1)$$

entspricht,
wobei der Begriff "$P_{ID}$" die Identifikationsnummer des sich einfügenden Peers bezeichnet, und der Begriff "level" der Ebenendifferenz zwischen
- der Ebene eines Kindknoten des Knotens, in welcher der Peer im Begriff ist, sich in den bestimmten Baum (R1, R2) einzufügen, und
- der anfänglichen Ebene des bestimmten Baums (R1, R2), welche einen Peer enthält, entspricht.

**11.** Verfahren nach Anspruch 8, wobei

- Peers, die im Begriff sind, sich in einen bestimmten Baum der zwei Bäume (R1, R2) einzufügen, in dem bestimmten Baum abwechselnd die Rolle eines inneren Knotens und die Rolle eines Blattknotens zugewiesen wird,
- die Kennung eine Identifikationsnummer in der Form einer Laufzahl ist,
- das Bestimmen eines Kontakt-Peers das Bestimmen einer Identifikationsnummer des Kontakt-Peers umfasst,
- wenn

- einem Peer, der im Begriff ist, sich in einen bestimmten Baum der zwei Bäume (R1, R2) einzufügen, die Rolle eines inneren Knotens zugewiesen wird und
- die letzte Ebene des bestimmten Baums nur eine einzige offene Position aufweist,
die Identifikationsnummer des Kontakt-Peers

$$P_{ID} - 2^{level}$$

entspricht,
wobei der Begriff "$P_{ID}$" die Identifikationsnummer des sich einfügenden Peers bezeichnet, und der Begriff "level" der Ebenendifferenz zwischen
- der letzten Ebene des bestimmten Baums (R1, R2) und
- der anfänglichen Ebene des bestimmten Baums (R1, R2), weiche einen Peer enthält,

entspricht.

**12.** Verfahren nach Anspruch 8, wobei

- ein Ressourcenverwalter (R3) von einem Peer, der im Begriff ist, sich in einen bestimmten Baum (R1, R2) einzufügen, kontaktiert wird;
- der Ressourcenverwalter (R3) für den Peer, der im Begriff ist, sich in den Baum einzufügen, einen Kontakt-Peer in dem bestimmten Baum (R1, R2) bestimmt;
- der Ressourcenverwalter (R3) Informationen über den Kontakt-Peer an den Peer, der im Begriff ist, sich in den Baum (R1, R2) einzufügen, überträgt; und
- der Peer, der im Begriff ist, sich in den bestimmten Baum einzufügen, den Kontakt-Peer auf der Basis der übertragenen Informationen kontaktiert.

**13.** Verfahren nach Anspruch 8, wobei

- n = 2,
- die Kennung eine Identifikationsnummer in der Form einer Laufzahl ist,
- das Bestimmen eines Kontakt-Peers das Bestimmen einer Identifikationsnummer des Kontakt-Peers umfasst,
- wenn einem Peer, der im Begriff ist, sich in einen bestimmten Baum (R1, R2) einzufügen, die Rolle eines Blattknotens zugewiesen wird, die Identifikationsnummer des Kontakt-Peers der Identifikationsnummer des Peers, der im Begriff ist, sich einzufügen, minus zwei entspricht.

**14.** Verfahren nach Anspruch 8, wobei

- n=2,
- die Kennung eine Identifikationsnummer in der Form einer Laufzahl ist,
- das Bestimmen eines Kontakt-Peers das Bestimmen einer Identifikationsnummer des Kontakt-Peers umfasst,
- wenn einem Peer, der im Begriff ist, sich in den bestimmten Baum einzufügen, die Rolle eines inneren Knoten zugewiesen wird, die Identifikationsnummer des Kontakt-Peers

$$P_{ID} - (2^{level} - 2)$$

entspricht,
wobei der Begriff "$P_{ID}$" die Identifikationsnummer des Peers, der im Begriff ist, sich einzufügen, bezeichnet, und der Begriff "level" die Ebenendifferenz zwischen

- der Ebene eines Kindknotens des Knotens, in welcher der Peer im Begriff ist, sich in den bestimmten Baum (R1, R2) einzufügen, und
- der anfänglichen Ebene des bestimmten Baums (R1, R2), welche einen Peer enthält,
entspricht.

**15.** Verfahren nach einem beliebigen der Ansprüche 13 oder 14, wobei sich jeweils zwei Peers parallel in den bestimmten Baum (R1, R2) einfügen.

**16.** Ressourcenverwalter (R3) für den Aufbau von zwei parallelen Verteilerbäumen (R1, R2) gemäß dem Verfahren nach Anspruch 1.

**17.** Peer-to-Peer-Netzwerk, umfassend

- einen Ressourcenverwalter (R3) gemäß Anspruch 16;

**Revendications**

**1.** Procédé de création de deux arbres de distribution parallèles (R1, R2) pour distribuer un contenu depuis un ou plusieurs noeuds sources vers des postes d'un réseau poste à poste, le premier arbre (R1) étant associé à une première partie du contenu et le deuxième arbre (R2) étant associé à une deuxième partie du contenu, et on attribue à chaque poste, parmi une pluralité de postes dans un arbre respectif des deux arbres, le rôle d'un noeud interne et on leur attribue, dans l'autre arbre respectif des deux arbres, le rôle d'un noeud externe, **caractérisé en ce que** l'on attribue alternativement aux postes destinés à se raccorder à un arbre particulier (R1, R2) parmi les deux arbres dans l'arbre particulier (R1, R2)

- le rôle d'un noeud interne et le rôle d'un noeud externe ou
- n fois le rôle d'un noeud interne et n fois le rôle du noeud externe, avec n ≥ 2.

**2.** Procédé selon la revendication 1, dans lequel

- dans le cas où l'on attribue à un poste destiné à se raccorder à un arbre particulier parmi les deux arbres (R1, R2) le rôle d'un noeud interne, on attribue à ce poste le rôle d'un noeud externe dans l'autre arbre respectif (R1, R2), et

- dans le cas où l'on attribue à un poste destiné à se raccorder à un arbre particulier parmi les deux arbres (R1, R2) le rôle d'un noeud externe, on attribue à ce poste le rôle d'un noeud interne dans l'autre arbre respectif.

**3.** Procédé selon la revendication 1, dans lequel

- on attribue alternativement aux postes destinés à se raccorder à un arbre particulier parmi les deux arbres (R1, R2) dans l'arbre particulier le rôle d'un noeud interne et le rôle d'un noeud externe ; et
- dans le cas où l'on attribue à un poste destiné à se raccorder à un arbre particulier parmi les deux arbres (R1, R2) le rôle d'un noeud externe, ce poste se raccorde à l'arbre particulier en tant que noeud enfant du dernier poste.

**4.** Procédé selon la revendication 1, dans lequel on attribue alternativement aux postes destinés à se raccorder à un arbre particulier parmi les deux arbres (R1, R2) dans l'arbre particulier le rôle d'un noeud interne et le rôle d'un noeud externe, et dans le cas où

- l'on attribue à un poste destiné à se raccorder à un arbre particulier parmi les deux arbres (R1, R2) le rôle d'un noeud interne et
- le dernier niveau de l'arbre particulier ne présente aucune position ouverte ou présente plus d'une position de poste ouverte,
ce poste se raccorde à l'arbre particulier
- dans la position du poste externe raccordé en premier au niveau d'un noeud externe du dernier niveau dans le cas où toutes les positions dans le dernier niveau sont occupées ou alors
- dans la position du poste externe raccordé en premier au niveau d'un noeud externe de l'avant-dernier niveau.

**5.** Procédé selon la revendication 1, dans lequel on attribue alternativement aux postes destinés à se raccorder à un arbre particulier parmi les deux arbres (R1, R2) dans l'arbre particulier le rôle d'un noeud interne et le rôle d'un noeud externe, et dans le cas où

- l'on attribue à un poste destiné à se raccorder à un arbre particulier parmi les deux arbres (R1, R2) le rôle d'un noeud interne et
- le dernier niveau de l'arbre particulier présente uniquement une seule position ouverte, ce poste se raccorde à l'arbre particulier (R1, R2) dans la position ouverte du dernier niveau.

**6.** Procédé selon la revendication 1, dans lequel

- un poste de contact dans un arbre est déterminé pour un poste destiné à se raccorder à un arbre particulier (R1, R2) ; et
- dans le cas où l'on attribue à un poste destiné à se raccorder à l'arbre particulier (R1, R2) le rôle d'un noeud externe, ce poste contacte son poste de contact associé dans l'arbre particulier et se raccorde à l'arbre particulier (R1, R2) en tant que noeud enfant du poste de contact dans une position externe.

**7.** Procédé selon la revendication 1, dans lequel on attribue alternativement aux postes destinés à se raccorder à un arbre particulier parmi les deux arbres (R1, R2) dans l'arbre particulier le rôle d'un noeud interne et le rôle d'un noeud externe, et

- dans le cas où

  - l'on attribue à un poste destiné à se raccorder à un arbre particulier parmi les deux arbres (R1, R2) le rôle d'un noeud interne et
  - le dernier niveau de l'arbre particulier (R1, R2) ne présente aucune position ouverte ou présente plus d'une position de poste ouverte, ce poste contacte un poste de contact associé et se raccorde à l'arbre particulier (R1, R2) dans la position du poste de contact, le poste de contact formant par la suite un noeud enfant du poste raccordé ; et

- dans le cas où

  - l'on attribue à un poste destiné à se raccorder à un arbre particulier parmi les deux arbres (R1, R2) le rôle d'un noeud interne et

- le dernier niveau de l'arbre particulier (R1, R2) ne présente qu'une seule position ouverte,

ce poste contacte son poste de contact associé dans l'arbre particulier (R1, R2) et se raccorde à l'arbre particulier en tant que noeud enfant du poste de contact dans une position externe.

**8.** Procédé selon la revendication 1, dans lequel un poste de contact dans un arbre (R1, R2) est déterminé pour un poste destiné à se raccorder à cet arbre (R1, R2) sur la base d'un identifiant du poste destiné à se raccorder à l'arbre (R1, R2).

**9.** Procédé selon la revendication 8, dans lequel

- on attribue alternativement aux postes destinés à se raccorder à un arbre particulier parmi les deux arbres (R1, R2) dans l'arbre particulier le rôle d'un noeud interne et le rôle d'un noeud externe,
- l'identifiant est un numéro d'identification sous la forme d'un numéro d'ordre,
- la détermination d'un poste de contact comprend la détermination d'un numéro d'identification du poste de contact,
- dans le cas où l'on attribue à un poste destiné à se raccorder à un arbre particulier parmi les deux arbres (R1, R2) le rôle d'un noeud externe, le numéro d'identification du poste de contact correspond au numéro d'identification du poste destiné à se raccorder moins un.

**10.** Procédé selon la revendication 8, dans lequel

- on attribue alternativement aux postes destinés à se raccorder à un arbre particulier parmi les deux arbres (R1, R2) dans l'arbre particulier (R1, R2) le rôle d'un noeud interne et le rôle d'un noeud externe,
- l'identifiant est un numéro d'identification sous la forme d'un numéro d'ordre,
- la détermination d'un poste de contact comprend la détermination d'un numéro d'identification du poste de contact,
- dans le cas où

  - l'on attribue à un poste destiné à se raccorder à un arbre particulier parmi les deux arbres (R1, R2) le rôle d'un noeud interne et
  - le dernier niveau de l'arbre particulier ne présente aucune position ouverte ou présente plus d'une position de poste ouverte,
  le numéro d'identification du poste de contact correspond à

$$P_{ID} - (2^{level} - 1)$$

  où le terme « $P_{ID}$ » désigne le numéro d'identification du poste se raccordant, et le terme « niveau » correspond à la différence de niveau entre
  - le niveau d'un noeud enfant du noeud où le poste est destiné à se raccorder à l'arbre particulier (R1, R2) et
  - le niveau initial de l'arbre particulier (R1, R2) qui contient un poste.

**11.** Procédé selon la revendication 8, dans lequel

- on attribue alternativement aux postes destinés à se raccorder à un arbre particulier parmi les deux arbres (R1, R2) dans l'arbre particulier le rôle d'un noeud interne et le rôle d'un noeud externe,
- l'identifiant est un numéro d'identification sous la forme d'un numéro d'ordre,
- la détermination d'un poste de contact comprend la détermination d'un numéro d'identification du poste de contact,
- dans le cas où

  - l'on attribue à un poste destiné à se raccorder à un arbre particulier parmi les deux arbres (R1, R2) le rôle d'un noeud interne et
  - le dernier niveau de l'arbre particulier ne présente qu'une seule position ouverte,
  le numéro d'identification du poste de contact correspond à

$$P_{ID} - 2^{level},$$

où le terme « $P_{ID}$ » désigne le numéro d'identification du poste se raccordant, et le terme « niveau » correspond à la différence de niveau entre
- le dernier niveau de l'arbre particulier (R1, R2) et
- le niveau initial de l'arbre particulier (R1, R2) qui contient un poste.

**12.** Procédé selon la revendication 1, dans lequel

- un gestionnaire de ressources (R3) est contacté par un poste destiné à se raccorder à un arbre particulier (R1, R2) ;
- le gestionnaire de ressources (R3) détermine un poste de contact dans l'arbre particulier (R1, R2) pour le poste destiné à se raccorder à l'arbre ;
- le gestionnaire de ressources (R3) transmet des informations sur le poste de contact au poste destiné à se raccorder à l'arbre (R1, R2) ; et
- le poste destiné à se raccorder à l'arbre particulier contacte le poste de contact sur la base des informations transmises.

**13.** Procédé selon la revendication 8, dans lequel

- n = 2,
- l'identifiant est un numéro d'identification sous la forme d'un numéro d'ordre,
- la détermination d'un poste de contact comprend la détermination d'un numéro d'identification du poste de contact,
- dans le cas où l'on attribue à un poste destiné à se raccorder à l'arbre particulier (R1, R2) le rôle d'un noeud externe, le numéro d'identification du poste de contact correspond au numéro d'identification du poste destiné à se raccorder moins deux.

**14.** Procédé selon la revendication 8, dans lequel

- Nu
- l'identifiant est un numéro d'identification sous la forme d'un numéro d'ordre,
- la détermination d'un poste de contact comprend la détermination d'un numéro d'identification du poste de contact,
- dans le cas où l'on attribue à un poste destiné à se raccorder à l'arbre particulier le rôle d'un noeud interne, le numéro d'identification du poste de contact correspond à

$$P_{ID} - (2^{level} - 2)$$

où le terme « $P_{ID}$ » désigne le numéro d'identification du poste destiné à se raccorder, et le terme « niveau » correspond à la différence de niveau entre

- le niveau d'un noeud enfant du noeud où le poste est destiné à se raccorder à l'arbre particulier (R1, R2) et
- le niveau initial de l'arbre particulier (R1, R2) qui contient un poste.

**15.** Procédé selon l'une quelconque des revendications 13 et 14, dans lequel deux postes en parallèle se raccordent simultanément à l'arbre particulier (R1, R2).

**16.** Gestionnaire de ressources (R3) pour créer deux arbres parallèles (R1, R2) conformément au procédé selon la revendication 1.

**17.** Réseau poste à poste, comprenant

- un gestionnaire de ressources (R3) selon la revendication 16.

Fig. 1

Fig. 2

R3

Resource
Manager

Resource Manager <->
Peer Protocol

Source
Node

Stripe A

R1

Stripe B

R2

1

2

2        3

1        3

Peer <-> Peer
Protocol

Fig. 3

R1

R2

Stripe A

Stripe B

S

① 5ⁱ ② ③ ④

② ④ ① ③ 5ˡ

joining peer assigned role of interior node: ○ⁱ

joining peer assigned role of leaf node: ○ˡ

stay interior: ○

stay leaf: ○

source node: Ⓢ

Fig. 4

EP 2 237 529 B1

R1

R2

Stripe A

Stripe B

S

1

2

5

3

4

3

2

4

1

5

joining peer assigned
role of interior node:

joining peer assigned
role of leaf node:

stay interior:

stay leaf:

source node:        S

Fig. 5

EP 2 237 529 B1

P: parent node

S: sibling node

J: joining node

C: child node

Fig. 6

Fig. 7

Fig. 8

Fig. 9a

Fig. 9b

Fig. 9c

Fig. 9d

Fig. 9e

Fig. 9f

Fig. 9g

Fig. 9h

Fig. 9i

Fig. 10a

Fig. 10b

Fig. 10c

Fig. 10d

Fig. 10e

Fig. 10f

Fig. 10g

Fig. 10h

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009034434 A1

### Non-patent literature cited in the description

- **E. W. Biersack et al.** Performance Analysis of Peer-to-Peer Networks for File Distribution. *roc. Fifth International Workshop on Quality of Future Internet Services (QofIS'04),* 2004, www.eurecom.fr/~btroup/BPublished/QofIS_scalingpaper.pdf
- **M. Castro et al.** SplitStream: High-bandwidth content distribution in cooperative environments. *2nd International Workshop on Peer-to-Peer Systems (IPTPS'03), iptps03.cs.berkeley.edu/final-papers/splitstream.pdf*
- **M. Dobuzhskaya et al.** *Zebra: Peer To Peer Multicast for Live Streaming Video,* 06 May 2004
- **A. Nicolosi ; S. Annapureddy.** P2PCAST: A Peer-To_Peer Multicast Scheme for Streaming Data. *Proceedings of the First IRIS Student Workshop on Peer-to-Peer Systems,* 09 May 2003